(19) Europäisches Patentamt / European Patent Office / Office européen des brevets

(11) **EP 4 207 570 A1**

(12) **EUROPEAN PATENT APPLICATION**
published in accordance with Art. 153(4) EPC

(43) Date of publication:
**05.07.2023 Bulletin 2023/27**

(21) Application number: **21870812.1**

(22) Date of filing: **13.05.2021**

(51) International Patent Classification (IPC):
**H02M 3/156** (2006.01)   **H02M 1/088** (2006.01)
**H02M 1/32** (2007.01)

(52) Cooperative Patent Classification (CPC):
Y02B 70/10

(86) International application number:
**PCT/CN2021/093559**

(87) International publication number:
**WO 2022/062425 (31.03.2022 Gazette 2022/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.09.2020 CN 202011024139**

(71) Applicant: **Huawei Digital Power Technologies Co., Ltd.**
**Shenzhen, Guangdong 518043 (CN)**

(72) Inventors:
• **HE, Zhengyan**
  **Shenzhen, Guangdong 518129 (CN)**
• **CHENG, Jiebin**
  **Shenzhen, Guangdong 518129 (CN)**
• **CHEN, Haitao**
  **Shenzhen, Guangdong 518129 (CN)**

(74) Representative: **Epping - Hermann - Fischer Patentanwaltsgesellschaft mbH**
**Schloßschmidstraße 5**
**80639 München (DE)**

(54) **SWITCHED CAPACITOR-TYPE DIRECT CURRENT/DIRECT CURRENT (DC/DC) CONVERTER, SWITCHING POWER SUPPLY, AND CONTROL METHOD**

(57) This application discloses a switched-capacitor DC/DC converter, a switching-mode power supply, and a control method. The switched-capacitor DC/DC converter includes a controllable switch and n switched capacitor modules, where the n switched capacitor modules are connected in series to form a voltage conversion branch circuit, and the voltage conversion branch circuit is connected to the controllable switch in series. n is an integer greater than or equal to 1. When the DC/DC converter implements different voltage conversion ratios, n may be different values. For example, when n = 1, a voltage conversion ratio implemented by the DC/DC converter is 2: 1; when n = 2, the voltage conversion ratio implemented by the DC/DC converter is 2: 1; when n = 3, the voltage conversion ratio implemented by the DC/DC converter is 5: 1; when n = 4, the voltage conversion ratio implemented by the DC/DC converter is 8: 1; when n = 5, the voltage conversion ratio implemented by the DC/DC converter is 13:1; and so on. The converter can implement voltage step-down or voltage step-up, and does not include a transformer inside. This reduces a size of the entire converter.

FIG. 6

## Description

This application claims priority to Chinese Patent Application No. 202011024139.1, filed with the China National Intellectual Property Administration on September 25, 2020 and entitled "SWITCHED-CAPACITOR DIRECT CURRENT/DIRECT CURRENT DC/DC CONVERTER, SWITCHING-MODE POWER SUPPLY, AND CONTROL METHOD", which is incorporated herein by reference in its entirety.

## TECHNICAL FIELD

This application relates to the field of technologies, and in particular, to a switched-capacitor direct current/direct current DC/DC converter, a switching-mode power supply, and a control method.

## BACKGROUND

At present, switching-mode power supplies are widely used in various types of electric equipment to provide electric energy that satisfies a requirement to the electric equipment.

For example, when application scenarios are AI and a data center, a supply voltage of a service board is usually 48 V. However, supply voltages of a chip and various loads inside the service board each need to be lower than 48 V. In other words, power cannot be directly supplied to the chip and the various loads at a same voltage as the 48 V supply voltage of the service board. Usually, at least two stages of voltage step-down are performed. Typically, a first stage of voltage step-down is stepping down a voltage from 48 V to 12 V, and a second stage of voltage step-down is stepping down a voltage from 12 V to 5 V, 3.3 V, or 1.8 V, to supply power to the chip and the various loads.

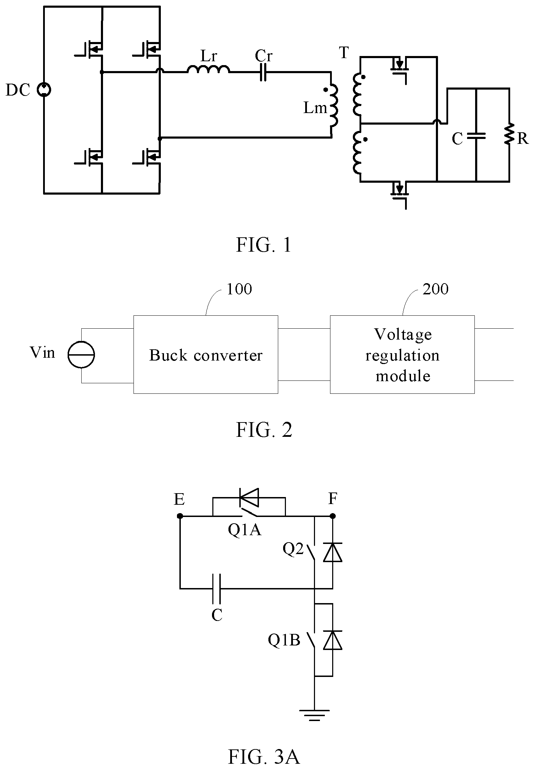

At present, a direct current/direct current DC/DC converter, for example, an LLC resonant DC/DC converter, used for the first stage of voltage step-down generally uses an isolated topology. FIG. 1 is a schematic diagram of a full-bridge LLC resonant DC/DC converter.

A voltage of a direct current DC power supply connected to an input end of a full-bridge circuit may be 48 V, and is input to a primary winding of a transformer through an LLC resonant circuit (a resonant inductor Lr, a resonant capacitor Cr, and an excitation inductor Lm). A secondary winding of the transformer is connected to a rectifier circuit.

The rectifier circuit outputs a direct current voltage of 12 V to supply power to a load R, or an output voltage of 12 V continues to be stepped down by using a second-stage voltage step-down circuit, to supply power to a chip or another load. A capacitor C at an output end is a filter capacitor.

A main disadvantage of the DC/DC converter shown in FIG. 1 is that the DC/DC converter includes the transformer T. The transformer T needs to include the primary winding, the secondary winding, and a magnetic core, and thus has a relatively small size. Consequently, a power supply has a relatively large size, and it is difficult to decrease a thickness of the power supply. The size can be reduced only by increasing a switching frequency. However, an increase in the switching frequency may cause an increase in a function, resulting in lower efficiency of the power supply. Usually, during implementation, the primary winding and the secondary winding of the transformer need to be coupled, and there is a repeated coupling current. As a result, a larger PCB area is required for a current flow. This hampers reduction of a power supply area.

## SUMMARY

To resolve the foregoing technical problem, this application provides a switched-capacitor direct current/direct current DC/DC converter, a switching-mode power supply, and a control method. Voltage conversion, namely, voltage step-down or voltage step-up can be implemented. In addition, a transformer is not included inside. This can reduce a size of the entire converter.

The switched-capacitor direct current/direct current DC/DC converter provided in an embodiment of this application may be used in the switching-mode power supply. In other words, the switched-capacitor DC/DC converter is a converter inside the switching-mode power supply. An input of the DC/DC converter is a direct current voltage, and an output of the DC/DC converter is also a direct current voltage. The switched-capacitor DC/DC converter provided in this embodiment of this application may be used as a bidirectional DC/DC converter. The switched-capacitor DC/DC converter may implement voltage step-down from left to right, and may also implement voltage step-up from right to left.

An application scenario of the switching-mode power supply is not specifically limited in embodiments of this application. The switching-mode power supply may be used in various application scenarios, such as a server, a communication base station, and a photovoltaic device, that require the switching-mode power supply. The switching-mode power supply may finally output a voltage required by a load such as a chip or a control circuit.

An embodiment of this application provides a switched-capacitor direct current/direct current DC/DC converter, including: a controllable switch and n switched capacitor modules, where n is an integer greater than or equal to 1; a first end of the controllable switch is a high-voltage end of the converter, the n switched capacitor modules are connected in series to form a voltage conversion branch circuit, a first end of the voltage conversion branch circuit is connected to a second end of the controllable switch, and a second end of the voltage conversion branch circuit is a low-voltage end of the converter; each switched capacitor module includes a first switching transistor, a second switching transistor, a third switching transistor, and a capacitor; a first end of the first switching transistor is connected to a first node, a second end of the first switching transistor is connected to a second node, a first end of the second switching transistor is connected to the second node, and a second end of the second switching transistor is grounded through the third switch; a first end of the capacitor is connected to the first node, and a second end of the capacitor is connected to the second end of the second switching transistor; the first switching transistor and the third switching transistor are in a same on/off state, an on/off state of the second switching transistor is complementary to the on/off state of the first switching transistor; first switching transistors in two adjacent switched capacitor modules are in different on/off states; and when the controllable switch is turned on, a second switching transistor in a switched capacitor module connected to the second end of the controllable switch is turned on.

Preferably, in order to decrease an impulse current during charging of the capacitor and protect the capacitor, an inductor may be added inside each switched capacitor module. The inductor can suppress impact of a charging current. Each switched capacitor module further includes an inductor; and the inductor and the capacitor are connected in series and are then connected to the first node and the second end of the second switching transistor.

Preferably, in order to decrease electrical components, reduce a circuit area, and decrease an impulse current during charging of the capacitor, an inductor may be disposed in only an odd-numbered switched capacitor module when n is an odd number. In other words, the converter further includes (n+1)/2 inductors, where all the switched capacitor modules are numbered sequentially from the high-voltage end to the low-voltage end, and a capacitor in an odd-numbered switched capacitor module is connected to the inductor in series; and the inductor and the capacitor, after being connected in series, are connected to the first node and the second end of the second switching transistor. Preferably, when the inductor is disposed in the switched capacitor module to reduce the impulse current of the capacitor as described above, in order to implement soft switching and reduce a power loss, a parameter of the inductor may be set, so that series resonance is formed between the inductor and the capacitor. That is, the inductor and the capacitor form a series resonant circuit. In addition, a resonance frequency of the series resonant circuit is equal to an operating frequency of the switched capacitor module.

Preferably, the high-voltage end of the converter provided in this embodiment is connected to a direct current power supply, and when the low-voltage end of the converter is an output end, the converter is a buck converter. A specific voltage step-down ratio may be implemented by setting a quantity of switched capacitor modules based on an actual requirement.

Preferably, when the converter is the buck converter, conduction modes of the switched capacitor module include a charging conduction mode and a discharging conduction mode. In the charging conduction mode, the second switching transistor is turned on, and the first switching transistor and the third switching transistor are both turned off. In the discharging conduction mode, the first switching transistor and the third switching transistor are both turned on, and the second switching transistor is turned off.

Preferably, the low-voltage end of the converter provided in this embodiment is connected to a direct current power supply, and when the high-voltage end of the converter is an output end, the converter is a boost converter. A specific voltage step-up ratio may be implemented by setting a quantity of switched capacitor modules based on an actual requirement.

Preferably, conduction modes of the switched capacitor module include a charging conduction mode and a discharging conduction mode. In the charging conduction mode, the first switching transistor and the third switching transistor are both turned on, and the second switching transistor is turned off. In the discharging conduction mode, the second switching transistor is turned on, and the first switching transistor and the third switching transistor are both turned off.

Preferably, whether the converter is a boost converter or a buck converter, voltages of capacitors in three adjacent switched capacitor modules satisfy the following relation:

$$Vc(n-2) = Vc(n-1) + Vcn,$$

where

$Vc(n-2)$, $Vc(n-1)$, and $Vcn$ represent voltages of capacitors in respectively an $(n-2)^{th}$ switched capacitor module, an $(n-1)^{th}$ switched capacitor module, and an $n^{th}$ switched capacitor module from the high-voltage end to the low-voltage end. It may be understood that, the foregoing voltage ratio relation is used in a scenario in which there are at least three switched capacitor modules connected in series. When there are less than two switched capacitor modules, a voltage at an input end and a voltage at an output end may be substituted into the foregoing formula as the foregoing voltages Vc, and the formula is true as usual. For example, when there is only one switched capacitor module, $Vin = Vc(1) + Vout$, where Vin represents a voltage at an input end of the converter, and Vout represents an output voltage of the converter. Likewise, when there are two switched capacitor modules, the foregoing formula may also be used, and is still true.

Preferably, different quantities of switched capacitor modules in the converter indicate different voltage step-down ratios or voltage step-up ratios for implementation. For example, when n is 1, a ratio of a voltage at the high-voltage end to a voltage at the low-voltage end is 2:1; when n is 2, a ratio of a voltage at the high-voltage end to a voltage at the low-voltage end is 3:1; when n is 3, a ratio of a voltage at the high-voltage end to a voltage at the low-voltage end is 5:1; when n is 4, a ratio of a voltage at the high-voltage end to a voltage at the low-voltage end is 8:1; and when n is 5, a ratio of a voltage at the high-voltage end to a voltage at the low-voltage end is 13:1. Voltage step-up or voltage step-down at a greater ratio may be further implemented by increasing the quantity of switched capacitor modules. It should be noted that the converter may be used as a buck converter in a forward direction, and may be used as a boost converter in a reverse direction.

Preferably, duty cycle intervals of the first switching transistor, the second switching transistor, and the third switching transistor each are 40% to 60%.

An embodiment of this application further provides a switching-mode power supply, including the switched-capacitor DC/DC converter described in the foregoing embodiment, and further including a direct current power supply, where a first end or a second end of the switched-capacitor direct current/direct current converter is configured to connect to the direct current power supply, to convert a voltage of the direct current power supply for output; and the first end of the switched-capacitor direct current/direct current converter is a first end of a controllable switch, a second end of the controllable switch is connected to a first end of a voltage conversion branch circuit, and a second end of the voltage conversion branch circuit is the second end of the switched-capacitor direct current/direct current converter. In application scenarios of AI and a data center, the switching-mode power supply may be designed to be an open-loop power supply. The open-loop power supply is a power supply whose output voltage changes with an input voltage. The power supply does not have a function of independently stabilizing the output voltage.

Preferably, when the first end of the switched-capacitor direct current/direct current converter is connected to the direct current power supply, and the switched-capacitor direct current/direct current converter is a buck converter; the switching-mode power supply further includes a voltage regulation module; the second end of the switched-capacitor direct current/direct current converter is connected to the voltage regulation module; and the voltage regulation module is configured to provide a regulated voltage to a load. The voltage regulation module may be a closed-loop controlled DC/DC conversion circuit, performing a closed-loop voltage regulation function, and providing a stable and accurate direct current voltage to a next-stage load.

Based on the switched-capacitor DC/DC converter provided in the foregoing embodiment, an embodiment of this application further provides a control method for a switched-capacitor direct current/direct current converter, applied to the switched-capacitor DC/DC converter described above, and including: sending a first drive signal to a first switching transistor, and sending a second drive signal to a third switching transistor, where a time sequence of the first drive signal is the same as a time sequence of the second drive signal; and sending a third drive signal to a second switching transistor, where an on/off state of the second switching transistor is complementary to an on/off state of the first switching transistor; first switching transistors in two adjacent switched capacitor modules are in different on/off states; and a time sequence of a drive signal that is output to a controllable switch is the same as a time sequence of a third drive signal of a second switching transistor in a switched capacitor module connected to a second end of the controllable switch.

Compared with a conventional technology, the technical solution provided in embodiments of this application has the following advantages.

The switched-capacitor DC/DC converter includes the controllable switch and the n switched capacitor modules. The first end of the controllable switch is the high-voltage end of the converter. The n switched capacitor modules are connected in series to form the voltage conversion branch circuit. The first end of the voltage conversion branch circuit is connected to the second end of the controllable switch, and the second end of the voltage conversion branch circuit is the low-voltage end of the converter. The on/off states of the switching transistors in each switched capacitor module are controlled, to implement charging and discharging of the capacitor, and provide an output voltage to an output end. The converter can implement a voltage conversion function with only a switch and a capacitor and without a transformer inside. That is, the converter can convert an input voltage and then output a converted voltage. The converter can be used as a boost converter, a buck converter, or a converter with a single function. Different quantities of switched capacitor modules indicate different ratios of an input voltage to an output voltage. The quantity of switched capacitor modules may be adjusted based on an actual requirement, to reach a required voltage conversion ratio. A transformer of a relatively large size is not included. As a result, a size of the entire converter can be reduced, so that it is easy to thin the converter. This helps reducing an overall size of the switching-mode power supply.

**BRIEF DESCRIPTION OF DRAWINGS**

FIG. 1 is a schematic diagram of a full-bridge LLC resonant DC/DC converter;
FIG. 2 is a schematic diagram of a switching-mode power supply according to an embodiment of this application;
FIG. 3A is a diagram of a structure of a single switched capacitor module according to an embodiment of this application;
FIG. 3B is a diagram of time sequences of drive signals of three switching transistors according to an embodiment of this application;

FIG. 4 is a schematic diagram of a DC/DC converter including one switched capacitor module according to an embodiment of this application;

FIG. 5 is a schematic diagram of a discharge path corresponding to FIG. 4 according to an embodiment of this application;

FIG. 6 is a schematic diagram of a DC/DC converter including two switched capacitor modules according to an embodiment of this application;

FIG. 7 is a schematic diagram of a discharge path corresponding to FIG. 6 according to an embodiment of this application;

FIG. 8 is a schematic diagram of a DC/DC converter including three switched capacitor modules according to an embodiment of this application;

FIG. 9 is a schematic diagram of a discharge path corresponding to FIG. 8 according to an embodiment of this application;

FIG. 10 is a schematic diagram of a DC/DC converter including four switched capacitor modules according to an embodiment of this application;

FIG. 11 is a schematic diagram of a discharge path corresponding to FIG. 10 according to an embodiment of this application;

FIG. 12 is a schematic diagram of a DC/DC converter including five switched capacitor modules according to an embodiment of this application;

FIG. 13 is a schematic diagram of a discharge path corresponding to FIG. 12 according to an embodiment of this application;

FIG. 14 is a schematic diagram of another switched-capacitor DC/DC converter according to an embodiment of this application;

FIG. 15 is a schematic diagram of still another switched-capacitor DC/DC converter according to an embodiment of this application; and

FIG. 16 is a flowchart of a control method for a switched-capacitor DC/DC converter according to an embodiment of this application.

## DESCRIPTION OF EMBODIMENTS

To make a person skilled in the art better understand the technical solution provided in embodiments of this application, the following first describes an application scenario of the technical solution provided in this application.

A switched-capacitor direct current/direct current DC/DC converter provided in an embodiment of this application may be used in a switching-mode power supply. In other words, the switched-capacitor DC/DC converter is a converter inside the switching-mode power supply. As the name of the DC/DC converter suggests, an input of the DC/DC converter is a direct current voltage, and an output of the DC/DC converter is also a direct current voltage. The switched-capacitor DC/DC converter provided in this embodiment of this application may be used as a bidirectional DC/DC converter. The switched-capacitor DC/DC converter may implement voltage step-down from left to right, and may also implement voltage step-up from right to left.

An application scenario of the switching-mode power supply is not specifically limited in embodiments of this application. The switching-mode power supply may be used in various application scenarios, such as a server, a communication base station, and a photovoltaic device, that require the switching-mode power supply. The switching-mode power supply may finally output a voltage required by a load such as a chip or a control circuit.

The following uses an example in which the switched-capacitor DC/DC converter is a buck converter for description.

FIG. 2 is a schematic diagram of a switching-mode power supply according to an embodiment of this application. The switching-mode power supply provided in this embodiment of this application may be used in AI or a digital center, or may be used in a communication power supply. A specific application scenario of the switching-mode power supply is not limited.

The switching-mode power supply includes a buck converter 100 and a voltage regulation module 200.

The buck converter 100 is a switched-capacitor direct current/direct current converter. Specific implementations of the switched-capacitor DC/DC converter are described in detail in subsequent embodiments.

An output end of the buck converter 100, namely, the switched-capacitor DC/DC converter, is connected to an input end of the voltage regulation module 200.

An output end of the voltage regulation module 200 is connected to a load, and is configured to supply power to the load.

For example, an input voltage of the buck converter 100 is 48 V, and an output voltage of the buck converter 100 is 12 V. The voltage regulation module 200 is configured to continue to step down an input voltage of 12 V to voltages of, for example, 5 V, 3.3 V, and 1.8 V, to supply power to a chip and various loads.

The buck converter 100 is configured to step down the input voltage of 48 V to the voltage of 12 V. However, power is not directly supplied to the chip at the obtained voltage of 12 V. The obtained voltage of 12 V is further stepped down by the voltage regulation module 200. It means that the voltage regulation module 200 needs to output an accurate voltage that satisfies a power supply requirement of the load.

In this case, open-loop control may be performed on the 12 V output voltage of the buck converter 100. The output voltage is allowed to fall within a specific voltage range, provided that the output voltage satisfies an input voltage range of the voltage regulation module 200. Therefore, for a first-stage buck converter that steps down a voltage from 48 V to 12 V, in the application scenarios of the AI and the data center, the switching-mode power supply may be designed to be an open-loop power supply. The open-loop power supply is a power supply whose output voltage changes with an input voltage. The power supply does not have a function of independently stabilizing the output voltage. For example, a ratio of the input voltage Vin of the buck converter 100 to the output voltage of the buck converter 100 may be 4:1 or 5:1. In addition, there is no insulation and voltage withstand requirements for the output voltage and the input voltage. Therefore, there is no need to force the use of an isolated topology. In this case, the buck converter in the switching-mode power supply provided in this embodiment of this application may be implemented by using a switched-capacitor DC/DC converter, and does not need to be isolated by using a transformer. As a result, a size of the converter can be reduced, so that the converter is thinner and smaller. This reduces a size of the switching-mode power supply, so that the switching-mode power supply satisfies a miniaturization requirement.

**Converter embodiment 1**

A switched-capacitor DC/DC converter provided in this embodiment includes a controllable switch and n switched capacitor modules, where n is an integer greater than or equal to 1. When the DC/DC converter implements different voltage conversion ratios, n may be different values. For example, when n = 1, the voltage conversion ratio implemented by the DC/DC converter is 2:1; when n = 2, the voltage conversion ratio implemented by the DC/DC converter is 2:1; when n = 3, the voltage conversion ratio implemented by the DC/DC converter is 5:1; when n = 4, the voltage conversion ratio implemented by the DC/DC converter is 8:1; when n = 5, the voltage conversion ratio implemented by the DC/DC converter is 13:1; and so on.

The n switched capacitor modules are connected in series to form a voltage conversion branch circuit. The voltage conversion branch circuit is connected in series to the controllable switch. All the switched capacitor modules are in a same structure. FIG. 3A is a schematic diagram of a switched capacitor module according to an embodiment of this application.

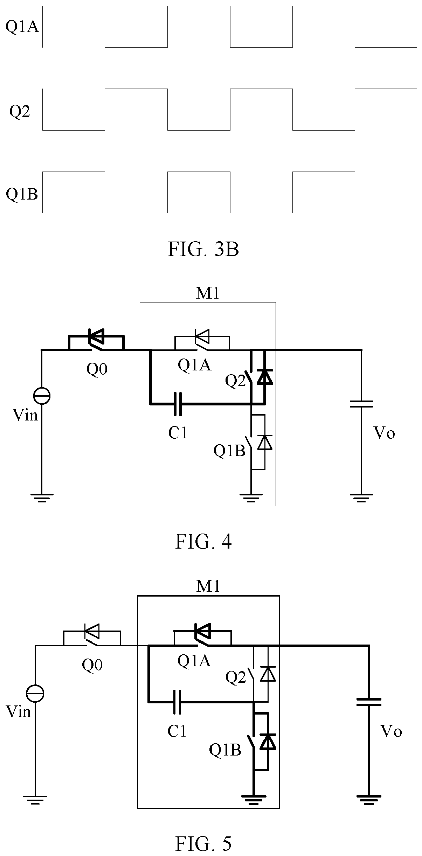

To make a person skilled in the art better understand the technical solution provided in embodiments of this application, the following uses FIG. 3A, FIG. 3B, and FIG. 4 as examples for description.

FIG. 4 is a schematic diagram of a DC/DC converter including a switched capacitor module according to an embodiment of this application.

The switched-capacitor DC/DC converter provided in this embodiment includes a controllable switch S and n switched capacitor modules, where n is an integer greater than or equal to 1.

In the converter shown in FIG. 4, n = 1.

A first end of the controllable switch S is a high-voltage end of the converter. The n switched capacitor modules are connected in series to form a voltage conversion branch circuit. A first end of the voltage conversion branch circuit is connected to a second end of the controllable switch S. A second end of the voltage conversion branch circuit is a low-voltage end of the converter. Whether the converter is used as a boost converter or a buck converter, the converter has the high-voltage end and the low-voltage end. When the converter is used as the buck converter, the high-voltage end is connected to a direct current power supply, and the low-voltage end is used as an output end. When the converter is used as the boost converter, the low-voltage end is connected to a direct current power supply, and the high-voltage end is used as an output end.

When the controllable switch S is turned on, a second switching transistor Q2 in a switched capacitor module connected to the controllable switch in series is turned on. In other words, the controllable switch S and Q2 in the adjacent switched capacitor module are in a same on/off state, and time sequences of corresponding drive signals are the same.

There is only one switched capacitor module in FIG. 4. Therefore, the voltage conversion branch circuit includes only one switched capacitor module.

As shown in FIG. 3A, each switched capacitor module includes a first switching transistor Q1A, a second switching transistor Q2, a third switching transistor Q1B, and a capacitor C.

Each switched capacitor module includes a first end and a second end, where the first end is a first node E, and the second end is a second node F. When the voltage conversion branch circuit includes only one switched capacitor module, E is the first end of the voltage conversion branch circuit, and F is the second end of the voltage conversion branch circuit.

A first end of the first switching transistor Q1A is connected to the first node E, and a second end of the first switching transistor Q1A is connected to the second node F. A first end of the second switching transistor Q2 is connected to the second node F, and a second end of the second switching transistor Q2 is grounded through the third switch Q1B. A first end of the capacitor C is connected to the first node E, and a second end of the capacitor C is connected to the second end of the second switching transistor Q2.

FIG. 3B is a diagram of time sequences of drive signals of switching transistors in a single switched capacitor module according to an embodiment of this application.

It can be seen from FIG. 3B that a time sequence of a drive signal of Q1A is the same as a time sequence of a drive signal of Q1B, and a time sequence of a drive signal of Q2 is complementary to the time sequence of the drive signal of Q1A. In addition, FIG. 3B is a schematic diagram of an example in which duty cycles of the drive signals of the three switching transistors are all 50%.

FIG. 3B is only a theoretical illustration, and an actual implementation may be different from FIG. 3B. For example, in actual implementation, there is a dead time between the first switching transistor Q1A and the second switching transistor Q2. In other words, there is a time period in which neither of Q1A and Q2 is turned on.

In a specific implementation, the drive signal of Q1A and the drive signal of Q2 may be complementary to each other. The first switching transistor Q1A and the third switching transistor Q1B are in a same on/off state. In other words, when the first switching transistor Q1A is turned on, the third switching transistor Q1B is also turned on; and when the first switching transistor Q1A is turned off, the third switching transistor Q1B is also turned off. Phases of the drive signals of the first switching transistor Q1A and the third switching transistor Q1B may be synchronized. That is, the time sequence of the drive signal of Q1 may be the same as the time sequence of the drive signal of Q1B.

An on/off state of the second switching transistor Q2 is complementary to an on/off state of the first switching transistor Q1A. In other words, when the first switching transistor Q1A is turned on, the second switching transistor Q2 is not turned on; and when the second switching transistor Q2 is turned on, the first switching transistor Q1A is not turned on. That is, either Q1A or Q2 is turned on at a time.

In another implementation, the duty cycles of the drive signals of the first switching transistor Q1A, the second switching transistor Q2, and the third switching transistor Q1B are all 50%. For example, in one switching cycle, the first switching transistor Q1A and the third switching transistor Q1B are turned on for a half of the cycle, and Q2 is turned off while Q1A is turned on; and in the other half of the cycle, the second switching transistor Q2 is turned on for the half of the cycle, and Q1A and Q1B are turned off for the half of the cycle. That is, the duty cycle of each switching transistor is 50%. During actual product implementation, there is the dead time between Q1A and Q2, and thus the duty cycles each may be less than 50%. Therefore, the duty cycles are not specifically limited in this embodiment of this application. For example, value intervals or value ranges of duty cycles of the first switching transistor, the second switching transistor, and the third switching transistor each may be set to 40% to 60%. It should be noted that, the first switching transistor and the third switching transistor are in the same on/off state. Thus, the duty cycles of the drive signals corresponding to the first switching transistor and the third switching transistor are the same, and the time sequences of the drive signals corresponding to the first switching transistor and the third switching transistor are the same. Moreover, the on/off state of the first switching transistor is complementary to the on/off state of the second switching transistor. Therefore, the duty cycles of the drive signals of the first switching transistor and the second switching transistor are complementary to each other, and the time sequences of the drive signals of the first switching transistor and the second switching transistor are complementary to each other. For example, the duty cycle of the first switching transistor is 40%, and without regard to the dead time, the duty cycle of the second switching transistor is 60%. The duty cycles of the first switching transistor and the second switching transistor are equal to 1.

Two adjacent switched capacitor modules are in different conduction modes. In different conduction modes, switching transistors at a same position are in different on/off states. For example, two adjacent switched capacitor modules are included. If a first switching transistor in a first switched capacitor module is in an on state, a first switching transistor in a second switched capacitor module needs to be controlled to be in an off state. On/off states of other switching transistors can be deducted by analogy.

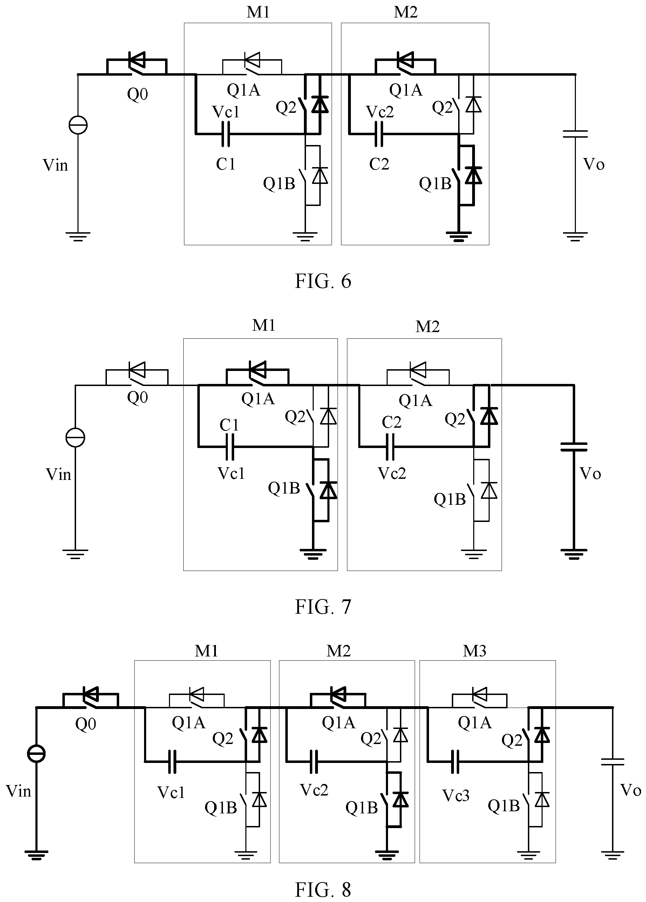

For better understanding, the following describes an operating principle in a case of n = 2 in the converter with reference to FIG. 6 and FIG. 7.

FIG. 6 and FIG. 7 each are a schematic diagram of a DC/DC converter including two switched capacitor modules according to an embodiment of this application.

It can be seen from FIG. 6 that the converter includes a first switched capacitor module M1 and a second switched capacitor module M2. Switching transistors at a same position in M1 and M2 are in different on/off states. For example, when Q2 in M1 is turned on, Q2 in M2 is turned off. In each switched capacitor module, an on/off state of Q2 is complementary to an on/off state of Q1A. Therefore, when Q2 in M1 is turned on, Q1A and Q1B in M1 each are in an off state. In other words, Q1A and Q1B in M1 are turned off. When Q2 in M2 is turned off, Q1A and Q1B in M2 each are in an on state. First switching transistors Q1A in the two adjacent switched capacitor modules M1 and M2 are in different on/off states. Q1B and the first switching transistor Q1A are in the same on/off state, and the on/off state of Q1A is complementary to the on/off state of Q2. Therefore, when the on/off state of Q1A is limited, it is equivalent that the on/off states of Q1B and Q2 are also limited.

Voltages of corresponding capacitors in three adjacent switched capacitor modules satisfy the following relation:

$$Vc(n–2) = Vc(n–1) + Vcn,$$

where
Vc(n-2), Vc(n-1), and Vcn represent voltages of capacitors in respectively an $(n-2)^{th}$ switched capacitor module, an $(n-1)^{th}$ switched capacitor module, and an $n^{th}$ switched capacitor module from the high-voltage end to the low-voltage end.

When there are less than two switched capacitor modules, a voltage at an input end and a voltage at an output end may be substituted into the foregoing formula as the foregoing voltages Vc, and the formula is true as usual. For example, when there is only one switched capacitor module, Vin = Vc(1) + Vout, where Vin represents a voltage at an input end of the converter, and Vout represents an output voltage of the converter.

Likewise, when there are two switched capacitor modules, the foregoing formula may also be used, and is still true.

It should be noted that, when the converter includes only one switched capacitor module, the foregoing formula is also true. For example, Vc(n-1) represents a voltage of a capacitor in the one switched capacitor module included in the converter. In this case, Vc(n-2) represents a voltage at the high-voltage end, and Vcn represents a voltage at the low-voltage end.

For more intuitive understanding, the following provides descriptions with reference to FIG. 4 and FIG. 5.

A buck converter is used as an example. A first end of Q0 is connected to a direct current power supply. In other words, a high-voltage end is connected to a direct current power supply Vin.

For example, as shown in FIG. 4, in a half of a cycle, when Q0 is turned on, Q2 is turned on. In this case, Vin charges a capacitor C1 through Q0, and a current path is S-C1-Q2-Vo. In this case, Vin = Vc1 + Vo.

As shown in FIG. 5, in the other half of the cycle, Q0 is turned off, Q1A and Q1B are turned on, Q2 is turned off. C1 discharges to an output end through Q1A. In this case, a voltage of the capacitor C1 satisfies Vc1 = Vo.

The foregoing describes the operating states of the switching transistors in only one switching cycle. Control may be performed in each switching cycle with reference to the foregoing manner. Vc1 = Vo, and thus Vin = Vc1 + Vo = 2Vo. That is, Vin = 2Vo, and Vin/Vo = 2: 1.

A specific implementation of each switching transistor is not limited in embodiments of this application. The switching transistor may be a MOS transistor, or may be an IGBT, a BJT, or the like.

It can be learned from the foregoing deduction process that 2:1 voltage step-down is implemented from the high-voltage end to the low-voltage end. It may be understood that, when the low-voltage end is connected to the direct current power supply, and the high-voltage end is the output end, two-fold voltage step-up is implemented.

With reference to FIG. 6 and FIG. 7, the following describes an operating principle of implementing 3:1 voltage step-down when n = 2.

For ease of understanding, the figures show voltage numerals corresponding to all capacitors.

When n = 2, the first switched capacitor module M1 and the second switched capacitor module M2 are connected in series to form a voltage conversion branch circuit.

As shown in FIG. 6, in a half of a cycle, when Q0 is turned on, Q2 in M1 is turned on, Q1A and Q1B in M1 are both turned off, Q2 in M2 is turned off, and Q1A and Q1B are both turned on. In this case, Vin charges a capacitor C1 through Q0, and a current path is Q0-C1 in M1-Q2 in M1-Q1A in M2-Vo. In this case, Vin = Vc1 + Vc2, and Vc2 = Vo.

As shown in FIG. 7, in the other half of the cycle, Q0 is turned off, Q2 in M1 is turned off, Q1A and Q1B in M1 are both turned on, Q2 in M2 is turned on, and Q1A and Q1B in M2 are both turned off. In this case, a voltage of C1 in M1 satisfies Vc1 = Vc2 + Vo.

Vin = Vc1 + Vc2, Vc2 = Vo, and Vc1 = Vc2. Therefore, Vin = 3Vo. That is, Vin/Vo = 3:1.

The foregoing describes the operating states of the switching transistors in only one switching cycle corresponding to n = 2. Control may be performed in each switching cycle with reference to the foregoing manner.

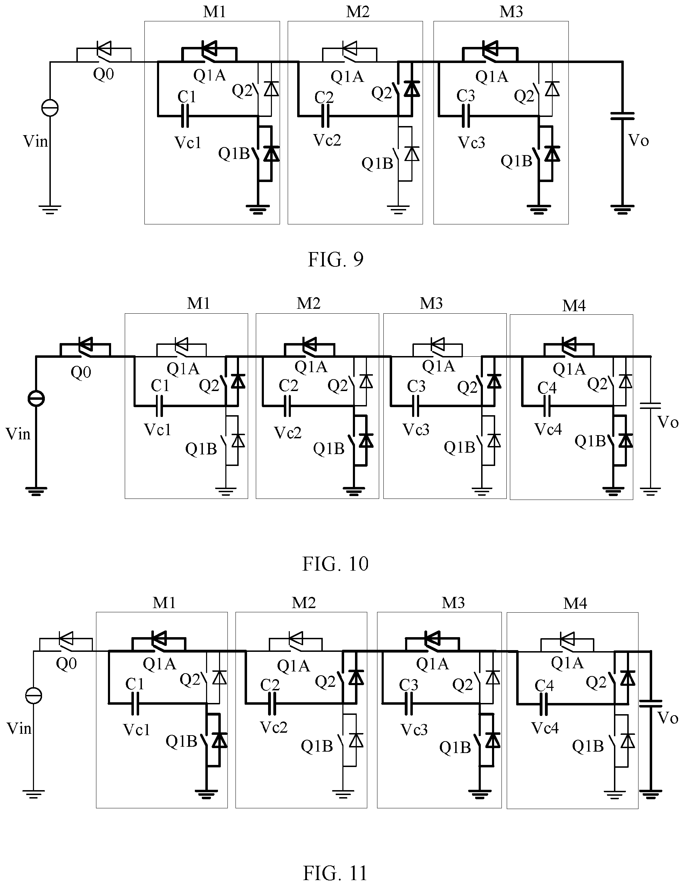

With reference to FIG. 8 and FIG. 9, the following describes an operating principle of implementing 5:1 voltage step-down when n = 3.

For ease of understanding, the figures show voltage numerals corresponding to all capacitors.

When n = 3, a first switched capacitor module M1, a second switched capacitor module M2, and a third switched capacitor module M3 are connected in series to form a voltage conversion branch circuit.

As shown in FIG. 8, in a half of a cycle, when Q0 is turned on, Q2 in M1 is turned on, Q1A and Q1B in M1 are both turned off, Q2 in M2 is turned off, Q1A and Q1B are both turned on, Q2 in M3 is turned on, and Q1A and Q1B in M3 are both turned off. In this case, a current path is Q0-C1 in M1-Q2 in M1-Q1A in M2-C3 in M3-Q2 in M3-Vo. In this case, Vin = Vc1 + Vc2, and Vc2 = Vc3 + Vo.

As shown in FIG. 9, in the other half of the cycle, Q0 is turned off, Q2 in M1 is turned off, Q1A and Q1B in M1 are both turned on, Q2 in M2 is turned on, Q1A and Q1B in M2 are both turned off, Q1A and Q1B in M3 are both turned on, and Q2 in M3 is turned off. C1 in M1 discharges, and C3 in M3 discharges. C1 charges a capacitor C2 in M2 through Q1A in M1, and supplies power to an output end. In this case, a voltage of C1 in M1 satisfies Vc1 = Vc2 + Vc3, where Vc3 = Vo.

Vin = Vc1 + Vc2, Vc2 = Vc3 + Vo, Vc1 = Vc2 + Vc3, and Vc3 = Vo. Therefore, Vin = 5Vo, and Vin/Vo = 5:1.

The foregoing describes the operating states of the switching transistors in only one switching cycle corresponding to n = 3. Control may be performed in each switching cycle with reference to the foregoing manner.

With reference to FIG. 10 and FIG. 11, the following describes an operating principle of implementing 8:1 voltage step-down when n = 4.

For ease of understanding, the figures show voltage numerals corresponding to all capacitors.

When n = 4, a first switched capacitor module M1, a second switched capacitor module M2, a third switched capacitor module M3, and a fourth switched capacitor module M4 are connected in series to form a voltage conversion branch circuit.

As shown in FIG. 10, in a half of a cycle, when Q0 is turned on, Q2 in M1 is turned on, Q1A and Q1B in M1 are both turned off, Q2 in M2 is turned off, Q1A and Q1B are both turned on, Q2 in M3 is turned on, Q1A and Q1B in M3 are both turned off, Q1A and Q1B in M4 are turned on, and Q2 in M4 is turned off. In this case, a current path is Q0-C1 in M1-Q2 in M1-Q1A in M2-C3 in M3-Q2 in M3-Q1A in M4-Vo. In this case, Vin = Vc1 + Vc2, Vc2 = Vc3 + Vc4, and Vc4 = Vo.

As shown in FIG. 11, in the other half of the cycle, Q0 is turned off, Q2 in M1 is turned off, Q1A and Q1B in M1 are both turned on, Q2 in M2 is turned on, Q1A and Q1B in M2 are both turned off, Q1A and Q1B in M3 are turned on, Q2 in M3 is turned off, Q2 in M4 is turned on, and Q1A and Q1B in M4 are both turned off. C1 in M1 discharges, and C3 in M3 discharges. C1 charges a capacitor C2 in M2 through Q1A in M1, and supplies power to an output end. In this case, a voltage of C1 in M1 satisfies Vc1 = Vc2 + Vc3, where Vc3 = Vc4 + Vo.

Vin = Vc1 + Vc2, Vc2 = Vc3 + Vc4, Vc4 = Vo, Vc1 = Vc2 + Vc3, and Vc3 = Vc4 + Vo. Therefore, Vin = 8Vo. That is, Vin/Vo = 8:1.

The foregoing describes the operating states of the switching transistors in only one switching cycle corresponding to n = 4. Control may be performed in each switching cycle with reference to the foregoing manner.

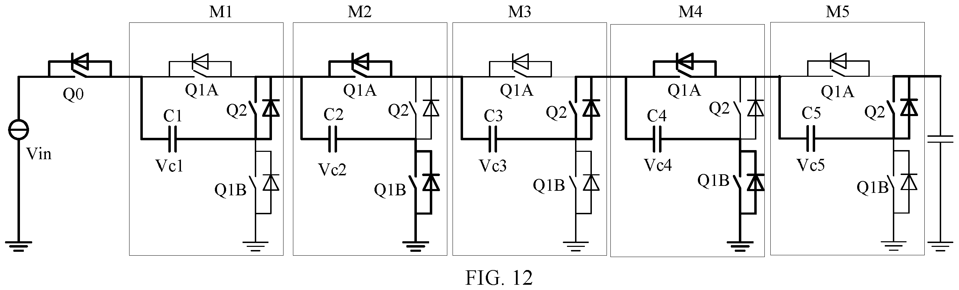

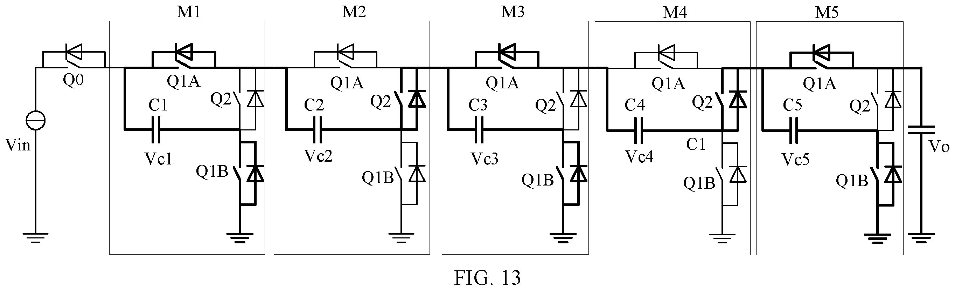

With reference to FIG. 12 and FIG. 13, the following describes an operating principle of implementing 13:1 voltage step-down when n = 5.

For ease of understanding, the figures show voltage numerals corresponding to all capacitors.

When n = 5, a first switched capacitor module M1, a second switched capacitor module M2, and a third switched capacitor module M3, a fourth switched capacitor module M4, and a fifth switched capacitor module M5 are connected in series to form a voltage conversion branch circuit.

As shown in FIG. 12, in a half of a cycle, when Q0 is turned on, Q2 in M1 is turned on, Q1A and Q1B in M1 are both turned off, Q2 in M2 is turned off, Q1A and Q1B are both turned on, Q2 in M3 is turned on, Q1A and Q1B in M3 are both turned off, Q1A and Q1B in M4 are turned on, Q2 in M4 is turned off, Q2 in M5 is turned on, and Q1A and Q1B in M5 are both turned off. In this case, a current path is Q0-C1 in M1-Q2 in M1-Q1A in M2-C3 in M3-Q2 in M3-Q1A in M4-Q2 in M5-Vo. In this case, Vin = Vc1 + Vc2, Vc2 = Vc3 + Vc4, and Vc4 = Vc3 + Vo.

As shown in FIG. 13, in the other half of the cycle, Q0 is turned off, Q2 in M1 is turned off, Q1A and Q1B in M1 are both turned on, Q2 in M2 is turned on, Q1A and Q1B in M2 are both turned off, Q1A and Q1B in M3 are turned on, Q2 in M3 is turned off, Q2 in M4 is turned on, Q1A and Q1B in M4 are both turned off, Q1A and Q1B in M5 are both turned off, and Q2 in M5 is turned on. C1 in M1 discharges, and C3 in M3 discharges. C1 charges a capacitor C2 in M2 through Q1A in M1, and supplies power to an output end. In this case, a voltage of C1 in M1 satisfies Vc1 = Vc2 + Vc3, where Vc3 = Vc4 + Vc5, and Vc5 = Vo.

Vin = Vc1 + Vc2, Vc2 = Vc3 + Vc4, Vc4 = Vc3 + Vo, Vc1 = Vc2 + Vc3, Vc3 = Vc4 + Vc5, and Vc5 = Vo. Therefore, Vin = 13Vo. That is, Vin/Vo = 13: 1.

The foregoing describes the operating states of the switching transistors in only one switching cycle corresponding to n = 5. Control may be performed in each switching cycle with reference to the foregoing manner.

In conclusion, the foregoing describes the operating principles in cases of n = 1, 2, 3, 4, and 5 separately with reference to the accompanying drawings. In addition, n may be one or more other integers greater than 5, and an operating principle of a converter is similar to each of the operating principles of the converters in the foregoing cases. Details are not described herein. In actual use, the person skilled in the art may select a value of n, namely, a quantity of switched capacitor modules, based on a specific voltage conversion ratio. A larger quantity of switched capacitor modules connected in series corresponds to a greater conversion ratio, for example, a greater voltage step-down ratio in voltage step-down, or a greater voltage step-up factor in voltage step-up.

The foregoing describes the operating principles of the converters used as buck converters. When the converter is a buck converter, conduction modes of the switched capacitor module include a charging conduction mode and a discharging conduction mode. In the charging conduction mode, a second switching transistor is turned on, and a first switching transistor and a third switching transistor are both turned off. In the discharging conduction mode, the first switching transistor and the third switching transistor are both turned on, and the second switching transistor is turned off.

When the converter is a boost converter, conduction modes of the switched capacitor module are different from the conduction modes of the switched capacitor module of the buck converter. To be specific, when the converter is the boost converter, the conduction modes of the switched capacitor module include a charging conduction mode and a discharging conduction mode. In the charging conduction mode, a first switching transistor and a third switching transistor are both turned on, and a second switching transistor is turned off. In the discharging conduction mode, the second switching transistor is turned on, and the first switching transistor and the third switching transistor are both turned off.

FIG. 13 is used as an example. When the converter is used as a boost converter, a first end of Q2 in M5 is connected to a direct current power supply. In other words, a right side is a power supply end, and a left side is an output end. When Q1A and Q1B in M5 are both turned on, and Q2 in M5 is turned off, the direct current power supply connected to the right side charges a capacitor C5 in M5.

The switched-capacitor DC/DC converter provided in this embodiment of this application can implement a voltage conversion function with only a switch and a capacitor and without a transformer inside. That is, the converter can convert an input voltage and then output a converted voltage. The converter can be used as a boost converter, a buck converter, or a converter with a single function. Different quantities of switched capacitor modules indicate different ratios of an input voltage to an output voltage. The quantity of switched capacitor modules may be adjusted based on an actual requirement, to reach a required voltage conversion ratio. The transformer is not included. As a result, a size of the converter can be reduced, so that it is easy to thin the converter. This helps reducing a size of a switching-mode power supply.

## Converter embodiment 2

To suppress or decrease an impulse current borne by a capacitor in each switched capacitor module during charging, an inductor may be added in each switched capacitor module. Specifically, the inductor may be added to a position connected to the capacitor in series.

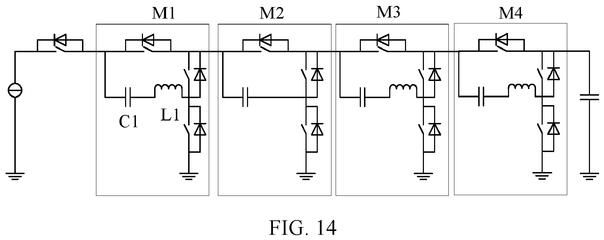

FIG. 14 is a schematic diagram of another switched-capacitor DC/DC converter according to an embodiment of this application.

This embodiment provides another switched-capacitor DC/DC converter. In FIG. 14, n = 4 is used as an example for description. This solution is applicable to a case in which n is any integer.

In the switched-capacitor DC/DC converter provided in this embodiment, each switched capacitor module further includes an inductor.

The inductor and a capacitor are connected in series and then connected to a first node and a second end of a second switching transistor. The inductor has a capability of suppressing a sudden change of a current. As shown in FIG. 14, M1 is used as an example for description, and a capacitor C1 and an inductor L1 are connected in series. Therefore, L1 can suppress an impulse current borne by the capacitor C1 during charging, to protect C1 from being damaged by the impulse current.

In addition, in order to minimize switching losses of switching transistors in each switched capacitor module and enable the switching transistors in each switched capacitor module to operate in a soft switching state as far as possible for improvement of power conversion efficiency of the converter, a specific technical solution is that L1 and C1 in each switched capacitor module are enabled to form a series resonant circuit, inductances of L1 in all switched capacitor modules are equal, and capacitances of C1 in all the switched capacitor modules are equal. When series resonance of L1 and C1 is equal to an operating frequency of each switched capacitor module, soft switching can be implemented on switching transistors in all the switched capacitor modules, and switching losses of the switching transistors in all the switched capacitor modules can be reduced.

The operating frequency of the switched capacitor module is a frequency of a drive signal of the switching transistor in the switched capacitor module. It can be seen from FIG. 3B that drive signals corresponding to Q1A, Q2, and Q1B have a same period, and also have a same frequency. That is, an operating frequency of a switched capacitor module is a frequency corresponding to the drive signal in FIG. 3B.

## Converter embodiment 3

In FIG. 14, a case in which each switched capacitor module includes one inductor is used as an example for description. To reduce an overall size of a converter and reduce costs, inductors may be disposed in some switched capacitor modules. There is no need to dispose an inductor in each switched capacitor module.

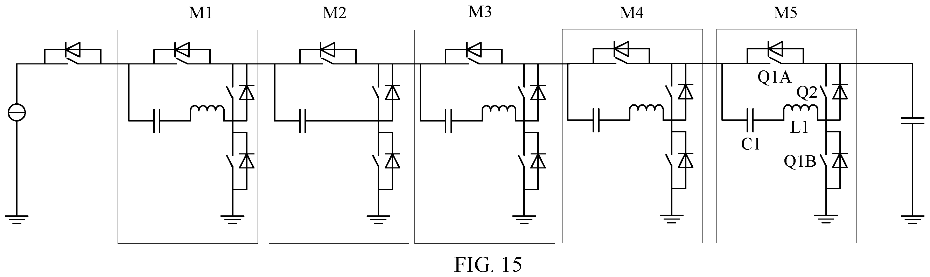

FIG. 15 is a schematic diagram of still another switched-capacitor DC/DC converter according to an embodiment of this application.

For the converter provided in this embodiment, a manner of disposing an inductor is only applicable to a case in which n is an odd number. An inductor and a capacitor are connected in series and then connected to a first node and a second end of a second switching transistor.

When n is the odd number, switched capacitor modules are numbered sequentially from a first end of a controllable switch, namely, a high-voltage side, to a low-voltage side. A capacitor in an odd-numbered switched capacitor module in a voltage conversion branch circuit is connected to an inductor in series. For example, inductors are disposed in switched capacitor modules numbered 1, 3, 5, 7, and 9.

Whether the converter is a boost transformer or a buck converter, one of a leftmost side and a rightmost side is an input end, and the other is an output end. For example, when the converter is the buck converter, the leftmost side is the input end, the rightmost side is the output end. Inductors need to be disposed in switched capacitor modules that serve as the input end and the output end. If inductors need to be decreased, and an impulse current borne by a capacitor can be decreased, an inductor may be disposed in only an odd-numbered switched capacitor module when n is an odd number. This is because only one of two adjacent switched capacitor modules is charging, and the other is discharging at the same time.

In FIG. 15, n = 5 is used as an example for description. It can be seen from FIG. 15 that M1, M3, and M5 each include an inductor connected to a capacitor in series. In other words, inductors are disposed in switched capacitor modules numbered 1, 3, and 5.

M5 is used as an example. A capacitor C1 is connected to an inductor L1 in series. The inductor has a capability of suppressing a sudden change of a current, and the capacitor C1 and the inductor L1 are connected in series. Therefore, L1 can suppress an impulse current borne by the capacitor C1 during charging, to protect C1 from being damaged by the impulse current.

The inductor and the capacitor form a series resonant circuit.

In addition, in order to minimize switching losses of switching transistors in each switched capacitor module and enable the switching transistors in each switched capacitor module to operate in a soft switching state as far as possible for improvement of power conversion efficiency of the converter, a specific technical solution is that L1 and C1 in each switched capacitor module are enabled to form a series resonant circuit, capacitances of C1 in all odd-numbered switched capacitor modules are equal, and capacitances, represented by C2, of all even-numbered switched capacitor modules are equal. When series resonance of L1 and C1 is equal to an operating frequency of each switched capacitor module, soft switching can be implemented on switching transistors in all switched capacitor modules, and switching losses of the switching transistors in all the switched capacitor modules can be reduced.

The operating frequency of the switched capacitor module is a frequency of a drive signal of the switching transistor in the switched capacitor module. It can be seen from FIG. 3B that drive signals corresponding to Q1A, Q2, and Q1B have a same period, and also have a same frequency. That is, an operating frequency of a switched capacitor module is a frequency corresponding to the drive signal in FIG. 3B.

It should be noted that the inductor L1 in the foregoing two embodiments of this application is merely used as a resonant element, and is not used as an energy storage element of the converter, which is different from a winding in a transformer. Therefore, a size of the converter can be relatively small, and a thickness of the converter can be decreased.

In addition, for each switching transistor in this embodiment of this application, the figures each show a diode connected anti-parallel to the switching transistor. The diode may not be provided. In other words, the switching transistor may not include the anti-parallel diode. If the switching transistor comes with an anti-parallel diode, the diode may be retained, which is not limited in this embodiment of this application.

**Switching-mode power supply embodiment**

Based on the switched-capacitor DC/DC converter provided in the foregoing embodiments, an embodiment of this application provides a switching-mode power supply.

Still refer to FIG. 2. The switching-mode power supply provided in this embodiment includes the switched-capacitor direct current/direct current converter described in any one of the foregoing embodiments, and further includes a direct current power supply.

The direct current power supply may be an output of a previous-stage converter, for example, a rectifier or another DC/DC converter.

A first end or a second end of the switched-capacitor direct current/direct current converter is configured to connect to the direct current power supply, to convert a voltage of the direct current power supply for output.

The first end of the switched-capacitor direct current/direct current converter is a first end of a controllable switch. A second end of the controllable switch is connected to a first end of a voltage conversion branch circuit. A second end of the voltage conversion branch circuit is the second end of the switched-capacitor direct current/direct current converter.

The switched-capacitor DC/DC converter provided in this embodiment is an open-loop converter. In order to output a more stable voltage, one voltage regulation module may be further included.

When the first end of the switched-capacitor direct current/direct current converter is connected to the direct current power supply, and the switched-capacitor direct current/direct current converter is a buck converter, the switching-mode power supply further includes a voltage regulation module.

The second end of the switched-capacitor direct current/direct current converter is connected to the voltage regulation module.

The voltage regulation module is configured to provide a regulated voltage to a load.

The voltage regulation module may be a voltage step-down module, and the voltage regulation module may be a closed-loop control module. Therefore, a voltage regulation function can be effectively performed through closed-loop control, and a stable output voltage is provided to a load that has a relatively high requirement for a voltage. The switching-mode power supply provided in this embodiment of this application includes the switched-capacitor DC/DC converter described in the foregoing embodiments. The converter can implement a voltage conversion function with only a switch and a capacitor and without a transformer inside. That is, the converter can convert an input voltage and then output a converted voltage. The converter can be used as a boost converter, a buck converter, or a converter with a single function. Different quantities of switched capacitor modules indicate different ratios of an input voltage to an output voltage. The quantity of switched capacitor modules may be adjusted based on an actual requirement, to reach a required voltage conversion ratio. The transformer is not included. As a result, a size of the converter can be reduced, so that it is easy to thin the converter. This helps reducing a size of the switching-mode power supply.

**Method embodiment**

Based on the switched-capacitor DC/DC converter and the switching-mode power supply that are provided in the foregoing embodiments, an embodiment of this application further provides a control method for a switched-capacitor direct current/direct current converter. The following provides a detailed description with reference to the accompanying drawing.

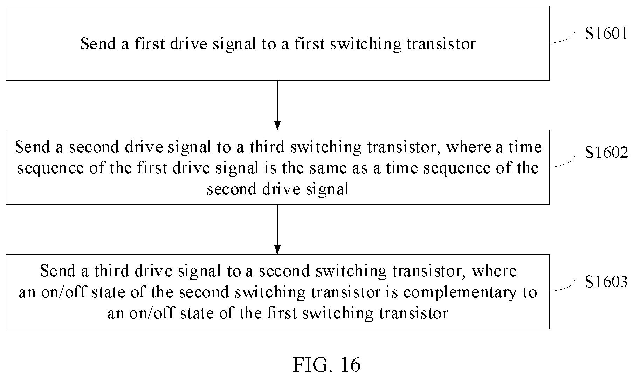

FIG. 16 is a flowchart of a method for a switched-capacitor DC/DC converter according to an embodiment of this application.

The control method for the switched-capacitor DC/DC converter provided in this embodiment is applied to the converter described in any one of the foregoing converter embodiments. The method includes the following steps: S1601: Send a first drive signal to a first switching transistor.

S1602: Send a second drive signal to a third switching transistor, where a time sequence of the first drive signal is the same as a time sequence of the second drive signal.

S1603: Send a third drive signal to a second switching transistor, where an on/off state of the second switching transistor is complementary to an on/off state of the first switching transistor.

It should be noted that there is no specific sequence among S1601, S1602, and S1603. Usually, the drive signals are simultaneously output to the switching transistors, so that the switching transistors perform corresponding switching actions simultaneously.

First switching transistors in two adjacent switched capacitor modules are in different on/off states.

A time sequence of a drive signal that is output to a controllable switch is the same as a time sequence of a third drive signal of a second switching transistor in a switched capacitor module connected to a second end of the controllable switch.

The first switching transistor and the third switching transistor are in a same on/off state. Therefore, the first switching transistor and the third switching transistor may share a same drive signal. In other words, the first drive signal and the second drive signal may be combined into one signal.

The control method is applied to the switched-capacitor DC/DC converter described in the foregoing embodiments of this application. The converter can implement a voltage conversion function with only a switch and a capacitor and without a transformer inside. That is, the converter can convert an input voltage and then output a converted voltage. The converter can be used as a boost converter, a buck converter, or a converter with a single function. Different quantities of switched capacitor modules indicate different ratios of an input voltage to an output voltage. The quantity of switched capacitor modules may be adjusted based on an actual requirement, to reach a required voltage conversion ratio. The transformer is not included. As a result, a size of the converter can be reduced, so that it is easy to thin the converter. This helps reducing a size of the switching-mode power supply.

It should be understood that in this application, "at least one (item)" refers to one or more, and "a plurality of" refers to two or more. The term "and/or" is used for describing an association relationship between associated objects, and indicates that three relationships may exist. For example, "A and/or B" may indicate the following three cases: Only A exists, only B exists, and both A and B exist, where A and B may be singular or plural.

The character "/" generally indicates an "or" relationship between the associated objects. "At least one of the following items (pieces)" or a similar expression thereof refers to any combination of these items, including any combination of singular items (pieces) or plural items (pieces). For example, at least one of a, b, or c may indicate a, b, c, a and b, a and c, b and c, or a, b, and c, where a, b, and c may be singular or plural.

The foregoing descriptions are merely preferred embodiments of this application, but are not intended to limit this application in any form. Although the preferred embodiments of this application are disclosed above, embodiments are not intended to limit this application. By using the method and the technical content disclosed above, any persons of ordinary skill in the art can make a plurality of possible changes and modifications on the technical solutions of this application, or amend the technical solutions thereof to be embodiments with equal effects through equivalent variations without departing from the protection scope of the technical solutions of this application. Therefore, any simple amendment, equivalent variation, and modification made on the above embodiments according to the technical essence of this application without departing from the content of the technical solutions of this application shall still fall within the protection scope of the technical solutions of this application.

## Claims

1. A switched-capacitor direct current/direct current converter, comprising a controllable switch and n switched capacitor modules, wherein n is an integer greater than or equal to 1;

   a first end of the controllable switch is a high-voltage end of the converter, the n switched capacitor modules are connected in series to form a voltage conversion branch circuit, a first end of the voltage conversion branch circuit is connected to a second end of the controllable switch, and a second end of the voltage conversion branch circuit is a low-voltage end of the converter;
   each switched capacitor module comprises a first switching transistor, a second switching transistor, a third switching transistor, and a capacitor;
   a first end of the first switching transistor is connected to a first node, a second end of the first switching transistor is connected to a second node, a first end of the second switching transistor is connected to the second node, a second end of the second switching transistor is grounded through the third switch, a first end of the capacitor is connected to the first node, and a second end of the capacitor is connected to the second end of the second switching transistor; the first switching transistor and the third switching transistor are in a same on/off state, and an on/off state of the second switching transistor is complementary to an on/off state of the first switching transistor; first switching transistors in two adjacent switched capacitor modules are in different on/off states; and when the controllable switch is turned on, a second switching transistor in a switched capacitor module connected to the second end of the controllable switch is turned on.

2. The converter according to claim 1, wherein each switched capacitor module further comprises an inductor; and
the inductor and the capacitor are connected in series and are then connected to the first node and the second end of the second switching transistor.

3. The converter according to claim 1, wherein when n is an odd number, the converter further comprises:

$(n+1)/2$ inductors, wherein
all the switched capacitor modules are numbered sequentially from the high-voltage end to the low-voltage end, and a capacitor in an odd-numbered switched capacitor module is connected to the inductor in series; and
the inductor and the capacitor, after being connected in series, are connected to the first node and the second end of the second switching transistor.

4. The converter according to claim 2 or 3, wherein the inductor and the capacitor form a series resonant circuit, and a resonance frequency of the series resonant circuit is equal to an operating frequency of the switched capacitor module.

5. The converter according to any one of claims 1 to 3, wherein the high-voltage end of the converter is connected to a direct current power supply, and when the low-voltage end of the converter is an output end, the converter is a buck converter.

6. The converter according to claim 5, wherein conduction modes of the switched capacitor module comprise a charging conduction mode and a discharging conduction mode;

in the charging conduction mode, the second switching transistor is turned on, and the first switching transistor and the third switching transistor are both turned off; and
in the discharging conduction mode, the first switching transistor and the third switching transistor are both turned on, and the second switching transistor is turned off.

7. The converter according to any one of claims 1 to 3, wherein the low-voltage end of the converter is connected to a direct current power supply, and when the high-voltage end of the converter is an output end, the converter is a boost converter.

8. The converter according to claim 7, wherein conduction modes of the switched capacitor module comprise a charging conduction module and a discharging conduction mode;

in the charging conduction mode, the first switching transistor and the third switching transistor are both turned on, and the second switching transistor is turned off; and
in the discharging conduction mode, the second switching transistor is turned on, and the first switching transistor and the third switching transistor are both turned off.

9. The converter according to any one of claims 1 to 3, wherein voltages of capacitors in three adjacent switched capacitor modules satisfy the following relation:

$Vc(n-2) = Vc(n-1) + Vcn$, wherein
$Vc(n-2)$, $Vc(n-1)$, and $Vcn$ respectively represent voltages of capacitors in an $(n-2)^{th}$ switched capacitor module, an $(n-1)^{th}$ switched capacitor module, and an $n^{th}$ switched capacitor module from the high-voltage end to the low-voltage end.

10. The converter according to claim 6 or 8, wherein when n is 1, a ratio of a voltage at the high-voltage end to a voltage at the low-voltage end is 2:1.

11. The converter according to claim 6 or 8, wherein when n is 2, a ratio of a voltage at the high-voltage end to a voltage at the low-voltage end is 3:1.

12. The converter according to claim 6 or 8, wherein when n is 3, the ratio of a voltage at the high-voltage end to a voltage at the low-voltage end is 5:1.

13. The converter according to claim 6 or 8, wherein when n is 4, the ratio of a voltage at the high-voltage end to a voltage at the low-voltage end is 8:1.

14. The converter according to claim 6 or 8, wherein when n is 5, the ratio of a voltage at the high-voltage end to a voltage at the low-voltage end is 13:1.

15. The converter according to any one of claims 1 to 14, wherein duty cycle intervals of the first switching transistor, the second switching transistor, and the third switching transistor each are 40% to 60%.

16. A switching-mode power supply, comprising the switched-capacitor direct current/direct current converter according to any one of claims 1 to 15, and further comprising a direct current power supply, wherein

a first end or a second end of the switched-capacitor direct current/direct current converter is configured to connect to the direct current power supply, to convert a voltage of the direct current power supply for output; and
the first end of the switched-capacitor direct current/direct current converter is a first end of a controllable switch, a second end of the controllable switch is connected to a first end of a voltage conversion branch circuit, and a second end of the voltage conversion branch circuit is the second end of the switched-capacitor direct current/direct current converter.

17. The switching-mode power supply according to claim 16, wherein when the first end of the switched-capacitor direct current/direct current converter is connected to the direct current power supply, and the switched-capacitor direct current/direct current converter is a buck converter, the switching-mode power supply further comprises a voltage regulation module;

the second end of the switched-capacitor direct current/direct current converter is connected to the voltage regulation module; and
the voltage regulation module is configured to provide a regulated voltage to a load.

18. A control method for a switched-capacitor direct current/direct current converter, applied to the converter according to any one of claims 1 to 15, and comprising:

sending a first drive signal to a first switching transistor, and sending a second drive signal to a third switching transistor, wherein a time sequence of the first drive signal is the same as a time sequence of the second drive signal; and
sending a third drive signal to a second switching transistor, wherein an on/off state of the second switching transistor is complementary to an on/off state of the first switching transistor;
first switching transistors in two adjacent switched capacitor modules are in different on/off states; and
a time sequence of a drive signal that is output to a controllable switch is the same as a time sequence of a third drive signal of a second switching transistor in a switched capacitor module connected to a second end of the controllable switch.

FIG. 1

FIG. 2

FIG. 3A

FIG. 3B

FIG. 4

FIG. 5

FIG. 6

FIG. 7

FIG. 8

FIG. 9

FIG. 10

FIG. 11

FIG. 12

EP 4 207 570 A1

FIG. 13

FIG. 14

M1    M2    M3    M4    M5

Q1A
Q2
C1    L1
Q1B

FIG. 15

Send a first drive signal to a first switching transistor — S1601

Send a second drive signal to a third switching transistor, where a time sequence of the first drive signal is the same as a time sequence of the second drive signal — S1602

Send a third drive signal to a second switching transistor, where an on/off state of the second switching transistor is complementary to an on/off state of the first switching transistor — S1603

FIG. 16

## INTERNATIONAL SEARCH REPORT

| International application No. |
|---|
| **PCT/CN2021/093559** |

**A.    CLASSIFICATION OF SUBJECT MATTER**

H02M 3/156(2006.01)i;  H02M 1/088(2006.01)n;  H02M 1/32(2007.01)n

According to International Patent Classification (IPC) or to both national classification and IPC

**B.    FIELDS SEARCHED**

Minimum documentation searched (classification system followed by classification symbols)

H02M

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; IEEE: 开关, 电容, 变换器, 串联, 谐振, 电感, 充电, 放电, switch, capacitor, converter, series, resonance, inductance, charge, discharge

**C.    DOCUMENTS CONSIDERED TO BE RELEVANT**

| Category* | Citation of document, with indication, where appropriate, of the relevant passages | Relevant to claim No. |
|---|---|---|
| PX | CN 112311232 A (HUAWEI TECHNOLOGIES CO., LTD.) 02 February 2021 (2021-02-02) claims 1-18 | 1-18 |
| X | 胡静 (HU, Jing). "基于开关网络应用在DC-DC变换器的设计方法研究 (A Design Method of Research Based on Switched Networks Applied to DC-DC Converter)" 中国优秀硕士学位论文全文数据库 工程科技II辑 (*Chinese Master's Theses Full-Text Database, Engineering Science & Technology II*), No. 2, 15 February 2019 (2019-02-15), ISSN: 1674-0246, section 1.3.2.3, section 2.1.2, figures 2-2 | 1-18 |
| X | CN 109565243 A (THE UNIVERSITY OF HONG KONG) 02 April 2019 (2019-04-02) description, paragraphs [0046]-[0108], and figures 1-16 | 1-18 |
| A | CN 106981987 A (GUANGDONG UNIVERSITY OF TECHNOLOGY) 25 July 2017 (2017-07-25) entire document | 1-18 |
| A | JP H11332112 A (JEOL LTD et al.) 30 November 1999 (1999-11-30) entire document | 1-18 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 July 2021** | **27 July 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/093559**

| Patent document cited in search report | | | Publication date (day/month/year) | Patent family member(s) | | | Publication date (day/month/year) |
|---|---|---|---|---|---|---|---|
| CN | 112311232 | A | 02 February 2021 | None | | | |
| CN | 109565243 | A | 02 April 2019 | US | 2019190376 | A1 | 20 June 2019 |
| | | | | US | 10715037 | B2 | 14 July 2020 |
| | | | | WO | 2018023695 | A1 | 08 February 2018 |
| CN | 106981987 | A | 25 July 2017 | CN | 106981987 | B | 19 April 2019 |
| JP | H11332112 | A | 30 November 1999 | JP | 3529623 | B2 | 24 May 2004 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011024139